# EUROPEAN PATENT SPECIFICATION

(11) **EP 1 437 890 B1**
(45) Date of publication and mention of the grant of the patent: **29.12.2010**
(21) Application number: 03300171.0
(22) Date of filing: 20.10.2003
(51) Int. Cl.: H04N 5/782

(54) **Inserting data into a timer for a video recording device**
Einfügen von Daten in den Zeitgeber einer Videoaufnahmeanlage
Insertion de données dans un temporisateur pour dispositif d'enregistrement vidéo

(30) Priority: 06.01.2003 EP 03290023
(43) Date of publication of application: 14.07.2004
(73) Proprietor: Thomson Licensing, 92130 Issy-les-Moulineaux (FR)
(72) Inventor: Barron, Stephan Anthony, Carmel, IN 46033 (US); Tang, Swee Swee, 640447 Singapore (SG)
(74) Representative: Rittner, Karsten

(56) References cited:
- EP-A- 0 940 985
- US-B1- 6 289 169
- US-B1- 6 344 878

## Description

### Field of the invention

This invention relates to a method for inserting additional data, e.g. program title, into a timer for a video recording device.

### Background

When a number of timers are set up in a video recording device, e.g. Personal Video Recorder (PVR), it is convenient for the user if the list of timers contains additional information, e.g. the titles of the programs to be recorded. This information may be entered interactively, e.g. by using an on-screen keyboard, or may be obtained e.g. from an Electronic Program Guide (EPG) which is an additional service of most video content providers. Such recording apparatuses that extract information from a previously received EPG are disclosed e.g. in US 6,344,878, US 6,289,169 and EP 0940985. However, some video content providers do not offer said service, or offer it for additional costs so that some customers decide not to acquire the service. In these cases channel, date and time, or maybe a kind of code number, must be entered when setting up the timer of a video recorder. Therefore, when the pre-programmed timers are listed on the screen, the titles and other additional data are not displayed, only channel, date and time. When the list is long, e.g. comprising a number of episodes of various series or other recurring programs, it is difficult to overview.

Further, in almost all publicly used video standards there is a possibility to transmit additional information in the vertical blanking interval (VBI), like teletext in Europe or Closed Captioning in the U.S. Various devices exist for extracting and decoding such information. In some cases also the title of the currently transmitted program is included in this information, e.g. for the NTSC standard it may be transmitted in line 21 according to the EIA/CEA-608-B standard.

### Summary of the invention

The problem to be solved by the invention is that program information, e.g. the program title or program type, is missing for recurring timers if a video recording device has no access to an EPG. This problem is solved by the method disclosed in claim 1. An apparatus using this method is disclosed in claim 8.

According to the invention, additional information data regarding a program is extracted from the VBI, while a program being part of a series is recorded, and this data is added to the timer information for all future parts of this series, so that the data may be displayed when the pre-programmed timers are listed. Whether or not a pre-programmed timer is part of a series of timers, can be detected e.g. by the way it was programmed, namely as a recurring timer.

Advantageous embodiments of the invention are disclosed in the dependent claims, the figures and the following detailed description.

### Brief description of the drawings

Exemplary embodiments of the invention are described with reference to the accompanying drawings, which show in
Fig.1 an exemplary system for extracting additional data from the VBI;
Fig.2 an on-screen display for detailed timer information;
Fig.3 a list of timers without program names; and
Fig.4 a list of timers with program names added.

### Detailed description of the invention

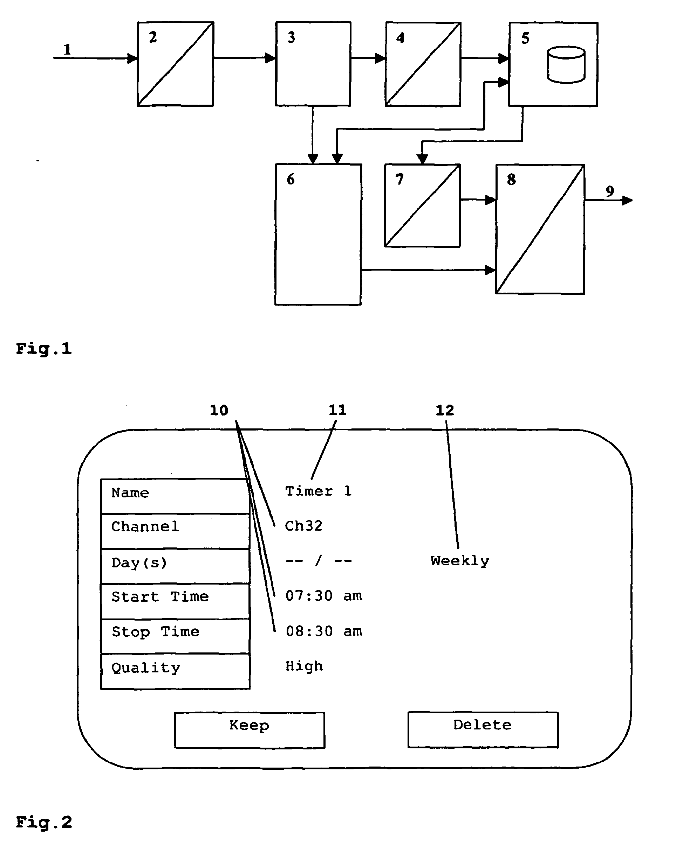

According to the invention, additional program information, e.g. the program title, is extracted from the information received in the VBI, and inserted into the list of timers if a program is being recorded due to a recurring timer. An exemplary block diagram of a digital system using the inventive method is depicted in Fig.1. An NTSC input signal 1 is received and decoded in a decoder 2 into a CCIR656 digital video stream. Then the additional information from line 21 is separated from said digital video stream, and decoded in a slicer 3. The resulting audio and video (AV) stream is sent to an MPEG (Motion Picture Expert Group) encoder 4, and the MPEG encoded signal is stored on a digital storage medium 5, e.g. hard disk drive, while the additional information decoded by the slicer 3 is processed by a processing unit 6. The processing unit 6 detects e.g. the program title and sends it to the storage medium 5, which stores the information in a file associated with the recorded AV stream. For reproduction of said AV stream the recorded data are read from the storage medium 5 and then transferred to an MPEG decoder 7. The decoded AV stream is transferred to a display control unit 8 that converts the AV stream and the data read from the file associated with said AV stream into display data. The information about how to convert the data from said file to pixels of the display is received from a graphics generator, which may be implemented as part of the processing unit 6. Further, the display control unit 8 encodes the display data and provides an NTSC formatted signal 9 for output on a TV.

When details of a recurring timer are displayed, the screen presented to the user may look like shown in Fig.2. It displays an identifier 11 for the current timer and the information entered by the user, namely channel and time 10 of the program to be recorded, and the information that this is a recurring timer 12, e.g. daily or weekly. The identifier 11 may be used as default title string in a list of timers.

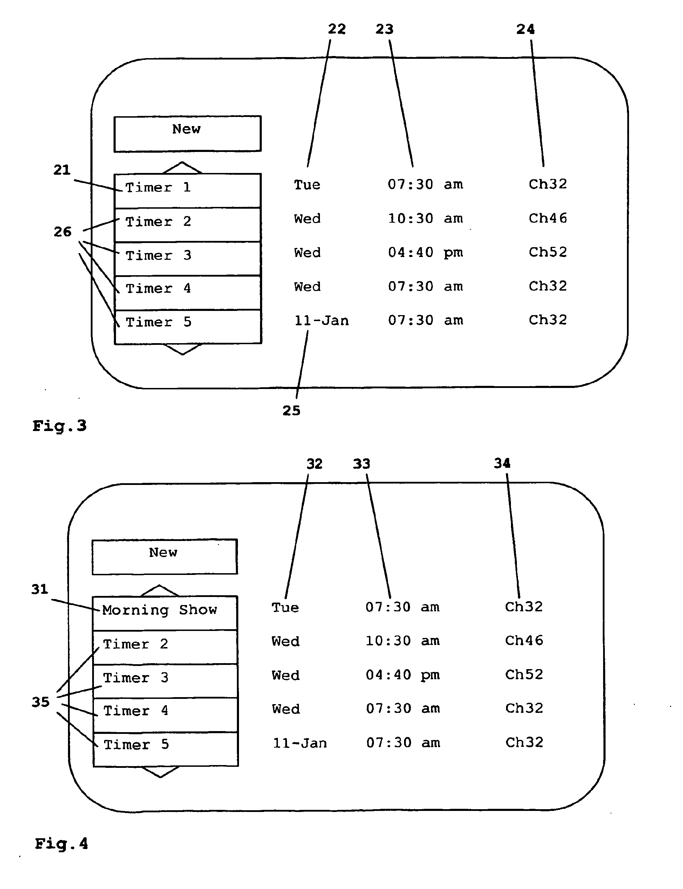

Fig.3 shows a screen displaying the list of timers, after programming a recurring timer 21, but before recording for the first time a program relating to said recurring timer. The display contains a default title string 21, the day 22, time 23 and channel 24 of the next timer instance, and various other timers 26 with their respective data. In this example recurring timers are denoted by a day display 22, while non-recurring timers are denoted by a day-month display 25.

According to the invention, the list of timers may be modified as shown in Fig.4 when for the first time a program relating to the recurring timer 21 is recorded. The list may still display day 32, time 33 and channel 34 of the recurring timer 31, and other timers 35, but the default title string for the recurring timer 31 is replaced with the actual program title extracted from the VBI.

In one embodiment of the invention the described insertion of extracted additional data is performed only if said additional data are not already stored for a recurring timer, e.g. when the recurring timer records for the first time. In another embodiment of the invention the extracted additional data are inserted whenever a program is recorded due to a recurring timer, possibly overwriting previously inserted information. In a third embodiment of the invention the stored data of the recurring timer may be compared to the additional data that are being received with the currently recorded program, and modified only if they have changed.

Alternatively to using a single line for a recurring timer when displaying a list of timers, it is possible to list several or all instances of a recurring timer. In this case the additional data may be extracted as described before, and displayed with every displayed instance of the recurring timer.

Advantageously, the described method for adding information to a recurring timer may be used in video or AV recording devices, but also in other recording devices that can be programmed using recurring timers and that receive additional information while recording. The additional information may be e.g. program title, program type like sports or children program or program classification, like not being appropriate for children.

## Claims

1. Method for adding information regarding a video program to a recurring timer for a video recording device, wherein said recurring timer specifies details necessary to record a series of video programs and has a plurality of instances, comprising the following steps
- recording a video program due to an instance of a recurring timer (12);
- extracting (3) additional information from the video signal, the additional information being received simultaneously with the video program;
- detecting (6) if said additional information contains a specified information regarding said video program;
- extracting (6) said specified information from said additional information;
- associating said specified information with at least future instances of the recurring timer; and
- displaying said recurring timer with said associated information within a list of programmed timers of said video recording device.

2. Method according to claim 1, wherein said specified information is the program title of the video program being recorded.

3. Method according to claim 1 or 2, wherein the specified information is only inserted to those instances of said recurring timer that do not have said specified information already inserted.

4. Method according to claim 1 or 2, wherein the specified information is inserted to all instances of said recurring timer.

5. Method according to any of claims 1-4, wherein said additional information is extracted from a vertical blanking interval of an analogue video signal.

6. Method according to claim 5, wherein said specified information is extracted from line 21 of the vertical blanking interval of an NTSC signal.

7. Method according to any of claims 1-6, wherein said specified information associated with at least future instances of the recurring timer overwrites previously associated information.

8. Apparatus for setting up a recurring timer in a video recording device, wherein said recurring timer specifies details necessary to record a series of video programs and has a plurality of instances, comprising
- means for recording a video program due to a recurring timer (12);
- means (3) for extracting, during the recording of a video program due to an instance of the recurring timer, additional information regarding said video program from the video signal, said additional information being received simultaneously with the video program;
- means (6) for detecting if said additional information contains a specified information regarding said video program, the specified information being displayable in a list of timers of said video recording device;
- means (6) for extracting said specified information from said additional information; and
- means for inserting said specified information to at least future instances of the recurring timer.

9. Apparatus according to claim 8, further specified by extracting said additional information from a vertical blanking interval of an analogue video signal.

10. Apparatus according to claim 8 or 9, further specified by extracting said specified information from line 21 of the vertical blanking interval of an NTSC signal.

## Patentansprüche

1. Verfahren zum Hinzufügen von ein Videoprogramm betreffenden Informationen zu einem periodisch wiederholenden Timer für ein Video-Aufzeichnungsgerät, wobei der periodisch wiederholende Timer zum Aufzeichnen einer Reihe von Videoprogrammen notwendige Einzelheiten spezifiziert und eine Mehrzahl von Instanzen hat, umfassend die folgenden Schritte:
- Aufzeichnen eines Videoprogramms aufgrund einer Instanz eines periodisch wiederholenden Timers (12);
- Herausziehen (3) von zusätzlichen Informationen aus dem Videosignal, wobei die zusätzlichen Informationen gleichzeitig mit dem Videoprogramm empfangen werden;
- Feststellen (6), ob die zusätzlichen Informationen spezifizierte, das Videoprogramm betreffende Informationen enthalten;
- Herausziehen (6) der spezifizierten Informationen aus den zusätzlichen Informationen;
- Zuordnen der spezifizierten Informationen zu wenigstens zukünftigen Instanzen des periodisch wiederholenden Timers; und
- Anzeigen des periodisch wiederholenden Timers mit den zugeordneten Informationen in einer Liste von programmierten Timern des Video-Aufzeichnungsgerätes.

2. Verfahren nach Anspruch 1, bei dem die spezifizierten Informationen der Programmtitel des gerade aufgezeichneten VideoProgramms sind.

3. Verfahren nach Anspruch 1 oder 2, bei dem die spezifizierten Informationen nur in die Instanzen des periodisch wiederholenden Timers eingefügt werden, in die nicht bereits die spezifizierten Informationen eingefügt worden sind.

4. Verfahren nach Anspruch 1 oder 2, bei dem die spezifizierten Informationen in alle Instanzen des periodisch wiederholenden Timers eingefügt werden.

5. Verfahren nach einem der Ansprüche 1 bis 4, bei dem die zusätzlichen Informationen aus einer vertikalen Austastlücke eines analogen Videosignals herausgezogen werden.

6. Verfahren nach Anspruch 5, bei dem die spezifizierten Informationen aus Zeile 21 der vertikalen Austastlücke eines NTSC-Signals herausgezogen werden.

7. Verfahren nach einem der Ansprüche 1 bis 6, bei dem die den wenigstens zukünftigen Instanzen des periodisch wiederholenden Timers zugeordneten spezifizierten Informationen zuvor zugeordnete Informationen überschreiben.

8. Vorrichtung zum Einrichten eines periodisch wiederholenden Timers in einem Video-Aufzeichnungsgerät, wobei der periodisch wiederholende Timer zum Aufzeichnen einer Reihe von Video-programmen notwendige Einzelheiten spezifiziert und eine Mehrzahl von Instanzen hat, umfassend:
- Mittel zum Aufzeichnen eines videoprogramms aufgrund eines periodisch wiederholenden Timers (12);
- Mittel (3), um während der Aufzeichnung eines Videoprogramms aufgrund einer Instanz des periodisch wiederholenden Timers zusätzliche, das Videoprogramm betreffende Informationen aus dem Videosignal herauszuziehen, wobei die zusätzlichen Informationen gleichzeitig mit dem videoprogramm empfangen werden;
- Mittel (6) zum Feststellen, ob die zusätzlichen Informationen spezifizierte, das Videoprogramm betreffende Informationen enthalten, wobei die spezifizierten Informationen in einer Liste von Timern des Viden-Aufzeichnungsgerätes anzeigbar sind;
- Mittel (6) zum Herausziehen der spezifizierten Informationen aus den zusätzlichen Informationen; und
- Mittel zum Einfügen der spezifizierten Informationen bei wenigstens zukünftigen Instanzen des periodisch wiederholenden Timers.

9. Vorrichtung nach Anspruch 8, ferner **gekennzeichnet durch** Herausziehen der zusätzlichen Informationen aus einer vertikalen Austastlücke eines analogen Videosignals.

10. Vorrichtung nach Anspruch 8 oder 9, ferner **gekennzeichnet durch** Herausziehen der spezifizierten Informationen aus Zeile 21 der vertikalen Austastlücke eines NTSC-Signals.

## Revendications

1. Procédé d'ajout d'informations relatives à un programme vidéo à un temporisateur récurrent d'un dispositif d'enregistrement vidéo, dans lequel ledit temporisateur récurrent spécifie des détails nécessaires pour enregistrer une série de programmes vidéo et possède une pluralité d'instances, **comprenant les étapes suivantes :**
- enregistrement d'un programme vidéo suite à une instance d'un temporisateur récurrent (12) ;
- extraction (3) d'informations supplémentaires du signal vidéo, les informations supplémentaires étant reçues simultanément avec le programme vidéo;
- détection (6) si lesdites informations supplémentaires contiennent une information spécifiée relative audit programme vidéo ;
- extraction (6) de ladite information spécifiée desdites informations supplémentaires ;
- association de ladite information spécifiée à au moins des instances futures du temporisateur récurrent ; et
- affichage dudit temporisateur récurrent avec ladite information associée dans une liste de temporisateurs programmés dudit dispositif d'enregistrement vidéo.

2. Procédé selon la revendication 1, dans lequel ladite information spécifiée est le titre du programme vidéo en cours d'enregistrement.

3. Procédé selon la revendication 1 ou 2, dans lequel l'information spécifiée est insérée uniquement dans les instances dudit temporisateur récurrent dans lesquelles ladite information spécifiée n'est pas déjà insérée.

4. Procédé selon la revendication 1 ou 2, dans lequel l'information spécifiée est insérée dans toutes les instances dudit temporisateur récurrent.

5. Procédé selon une quelconque des revendications 1 à 4, dans lequel lesdites informations supplémentaires sont extraites d'un intervalle de suppression verticale d'un signal vidéo analogique.

6. Procédé selon la revendication 5, dans lequel ladite information spécifiée est extraite de la ligne 21 de l'intervalle de suppression verticale d'un signal NTSC.

7. Procédé selon une quelconque des revendications 1 à 6, dans lequel ladite information spécifiée associée à au moins des instances futures du temporisateur récurrent écrase des informations précédemment associées.

8. Appareil de configuration d'un temporisateur récurrent dans un dispositif d'enregistrement vidéo, dans lequel ledit temporisateur récurrent spécifie des détails nécessaires pour enregistrer une série de programmes vidéo et possède une pluralité d'instances, **comprenant :**
- un moyen pour enregistrer un programme vidéo suite à un temporisateur récurrent (12) ;
- un moyen (3) pour extraire, lors de l'enregistrement d'un programme vidéo suite à une instance du temporisateur récurrent, des informations supplémentaires relatives audit programme vidéo du signal vidéo, lesdites informations supplémentaires étant reçues simultanément avec le programme vidéo;
- un moyen (6) pour détecter lesdites informations supplémentaires contiennent une information spécifiée relative audit programme vidéo, l'information spécifiée pouvant être affichée dans une liste de temporisateurs dudit dispositif d'enregistrement vidéo ;
- un moyen (6) pour extraire ladite information spécifiée desdites informations supplémentaires ; et
- un moyen pour insérer ladite information spécifiée dans au moins des instances futures du temporisateur récurrent.

9. Appareil selon la revendication 8, spécifié en outre par l'extraction desdites informations supplémentaires à partir d'un intervalle de suppression verticale d'un signal vidéo analogique.

10. Appareil selon la revendication 8 ou 9, spécifié en outre par l'extraction de ladite information spécifiée à partir de la ligne 21 de l'intervalle de suppression verticale d'un signal NTSC.
